# EUROPEAN PATENT APPLICATION

(11) **EP 4 089 046 A1**
(43) Date of publication of application: **16.11.2022**
(21) Application number: 21382428.7
(22) Date of filing: 11.05.2021
(51) Int. Cl.: B66F 9/075, B60G 3/08, B60G 9/02, B60G 17/0165

(54) **SELF-LEVELLING CHASSIS**

(71) Applicant: Mecaplus SL., 22535 Esplús (ES)
(72) Inventor: BAYONA GOMEZ, EVARISTO, 22535 ESPLÚS (ES); BAYONA VILA, EVARISTO, 22535 ESPLÚS (ES)
(74) Representative: Aguilar Catalán, Blanca

(57) **Abstract**

The chassis of the invention includes a levelling system with a configuration in which the overturning lines generated by the layout of the wheels remain a rectangle formed by the points where the wheels are touching the supporting ground, allowing for the central unit to remain levelled within certain pre-set limits. The chassis is made up of a central unit 30, with an upper flange 33 bolted to the superstructure to be dynamically levelled, to which two rockers 10 and 20 are jointed, controlled by actuators 60-80 that level the X-axis and actuators 79-90 that level the Y-axis. The rockers are connected to the front and rear axles 50 and 40 that, in turn, are connected to the wheels 2-3-4-5 by a central part 57-47 and jointed boxes 55-56 and 45-46, also assisted by actuators 41-43 and 42-44, which have a tilt sensor 104 connected to a control PLC 103 that controls the actuators by reading the sensors giving the relative position between the different parts.

## Description

### SECTOR OF THE ART

This invention refers to a multi-function self-levelling chassis for machinery in the construction, forestry, and industrial sectors, as well as others in which a chassis is required that dynamically levels the machinery and permanently provides "rectangular" overturning lines that are as wide as possible to prevent the hazard of excessive tilt on sloping or rough land and to improve traction, ensuring the support of all four wheels at all times.

### INVENTION BACKGROUND

There are endless chassis equipped with self-levelling systems, including the one described in invention patent WO2020/096953 A1, which involves four arms attached to a central unit, each controlled by a hydraulic actuator.

At the end of each arm is a rotary actuator and a wheel for chassis movement, enabling each arm to move independently.

One or two pressure sensors are installed in each hydraulic actuator, which indirectly measure the pressure applied on the ground by each of the wheels.

The central unit includes one or two inclinometers that measure the tilt of the central unit and of the control PLCs. The central unit is also fitted with hydraulic valves that control the hydraulic actuators.

Based on this structure, and depending on the centre of gravity of the superstructure installed on the central unit, the device can create four control triangles.

Depending on the triangle formed, a virtual pivot is created between two jointed arms at the tip of the triangle and a virtual levelling axle between the two jointed arms corresponding to the base of the triangle using the control hydraulics.

On the levelling axle, one arm rises and the other falls, or vice versa, one arm falls and the other rises to level the line formed between the base and the tip of the triangle and at the virtual pivot.

On the virtual pivot, the hydraulic actuators are interconnected and, therefore, act as a pivoting axle, in turn sending oil or removing oil to level the axle parallel to this virtual axle.

This levelling concept is only possible if the overturning lines are a triangle because, when the axle of the triangle base is levelled, the entire assembly pivots on the virtual pivot at the tip of the triangle and, subsequently, the four wheels remain in contact with the ground.

As a result, the levelling concept of this system is based on the overturning lines being formed by triangles, which means that the resulting machine stability is lower depending on the centre of gravity in the triangle.

Where the centre of gravity is right between two virtual triangles, there will be greater stability on one axle or another depending on the triangle used.

In short, in a dynamic levelling situation "While traction is moving", depending on the triangle selected, there will not be the same safety from overturning on the X-axis or Y-axis as if the overturning lines remained a rectangle, where the distance to its sides is the same.

Furthermore, the system described in said document WO2020/096953 A1 is equipped with pressure sensors on the hydraulic actuators that move the jointed arms to ascertain whether or not the wheels are touching the ground and, as a result, make the decision with regard to the levelling or movement of the corresponding arm using a control PLC.

The use of pressure sensors on the actuators could lead to incorrect data on whether or not a wheel is touching the ground, due to the presence of lateral eccentric loads that could create zero-value readings for the sensors when the wheels are in contact with the ground.

This means that the wheel is touching the ground, but the control PLC receives a reading of 0 bar, leading the PLC to believe that the wheel is not touching the ground. This could generate unforeseen movements such as the control system activating the movement of the corresponding hydraulic actuator to move the wheel until it touches the ground, despite it already touching. This is the case because, in this situation, the chassis is in "Before overturn" balance, and the movement of said actuator would generate a movement that would inevitably cause the structure to overturn.

### EXPLANATION OF THE INVENTION

The proposed multi-function self-levelling chassis solves the aforementioned problem in an extremely satisfactory manner, providing a relative position system for the wheels that provides unequivocal information to be sent to the PLC, or where the failure probability of the data on the wheel position is as low as possible through the use of a mechanical system not prone to errors.

Therefore, the chassis of the invention includes a levelling system with a configuration in which the overturning lines generated by the layout of the wheels remain a rectangle formed by the points where the wheels are touching the supporting ground, allowing for the central unit to remain levelled within certain pre-set limits of +-0.5°.

More specifically, the chassis of the invention is based on a central unit, with an upper flange to which to bolt the superstructure to be dynamically levelled, to which two rockers fitted lengthways are connected, one at the front and another at the back, both jointed to the central unit using respective horizontal and transverse rotating axles. This means that both include a horizontal-longitudinal rotating axle that is connected to the steering, and another rotating axle that is attached to an actuator, and another horizontal-transversal axle attached to a second actuator used to level the Y-axis, while the steering is controlled by another actuator that levels the X-axis.

Through their rotating axles, the rockers are connected to the front and rear axles of the wheels, which include a central part and two boxes which may or may not include steering.

Each box is attached to the central part by a horizontal-longitudinal axle to allow for relative rotation between the two.

The boxes on the rear axle have flanges to which a drive wheel or similar can be bolted to actuate the corresponding wheel.

In turn, the central part also has another rotating axle to connect it to the end of the corresponding actuator, which may be electric, hydraulic, or pneumatic.

In terms of the boxes on the front axle, these are open and are connected to the central part by a horizontal-longitudinal axle to allow for relative rotation between the two. In turn, each open box is connected to a closed box by a vertical axle for directional rotation by way of actuators, which may be electric, hydraulic, or pneumatic.

Finally, the closed boxes have a connecting flange to which a drive wheel or similar can be bolted to actuate the corresponding wheels.

The central part of the front axle includes another rotating axle parallel to the rotating axle for connection to the rocker so that it can be connected to the end of the corresponding actuator, which may be electric, hydraulic, or pneumatic.

From an electronic viewpoint, the chassis includes a tilt sensor on the central chassis, connected to a control PLC, with relative position sensors between the closed boxes and the central steering, and may include secondary support sensors as an option.

Alongside this, the system will include parts for the control of the different actuators involved in the chassis.

### DESCRIPTION OF THE DIAGRAMS

To complete the description given below and to provide a better understanding of the characteristics of the invention, according to a preferred example of its practical construction, a set of diagrams are attached as an integral part of this description to represent the following in an illustrative yet unlimited manner:
Figures 1 and 2.- Show separate perspective views of a multi-function self-levelling chassis in line with the purpose of this invention, where Figure 2 is shown with some parts represented transparently for a view of parts that are hidden in Figure 1.
Figures 3 and 4.- Show an expanded close-up of the chassis at its front end from different perspectives.
Figures 5 and 6.- Show an expanded close-up of the chassis at its rear end from different perspectives.
Figure 7.- Shows a rear elevation view of the chassis and its behaviour in the event of certain ground irregularity.
Figures 8 and 9.- Show different perspectives of an expanded close-up of one of the rockers involved in the chassis of the invention.
Figure 10.- Shows a perspective close-up of the control parts of the actuators involved in the chassis of the invention.
Figure 11.- Shows a perspective close-up of the central unit involved in the chassis of the invention.
Figure 12.- Shows a perspective view of the chassis when one of the front wheels loses contact with the ground.
Figure 13.- Shows an elevation view of the unit from the previous figure.
Figure 14.- Shows a rear perspective view of the chassis when one of its rear wheels loses contact with the ground.
Figure 15.- Shows a ground view of the chassis.
Figure 16.- Shows a perspective view of the chassis, over which the control rectangle is indicated.
Figure 17.- Shows an expanded close-up of the central unit and the location of the PLC on it.
Figures 18 and 19.- Show separate views in different perspectives of the layout of some of the sensors involved in the system of the invention.
Figures 20 and 21.- Show separate wiring diagrams of the relationship between the PLC and the different sensors involved in the system; in the first case for the electric version, and in the second for the hydraulic.
Figure 22.- Shows the inclusion on the chassis of manual controls to adjust its height.

### PREFERENTIAL VERSION OF THE INVENTION

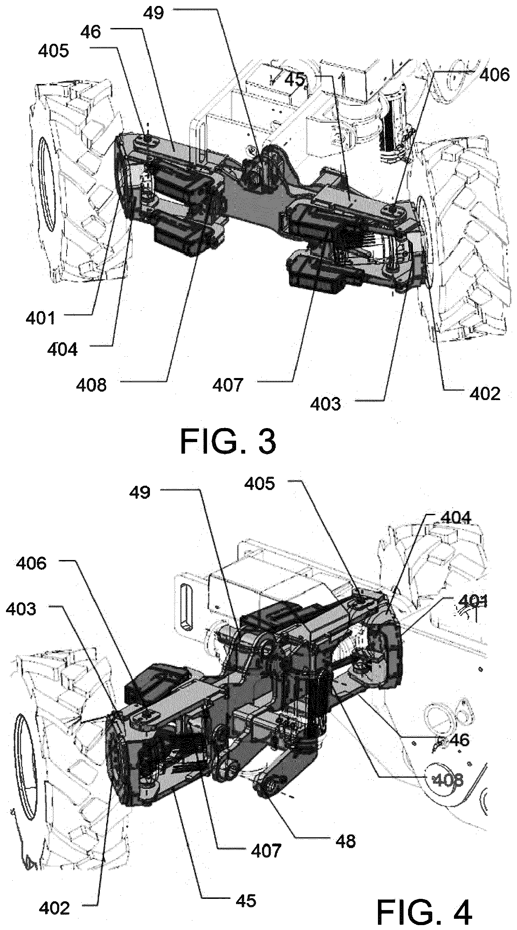

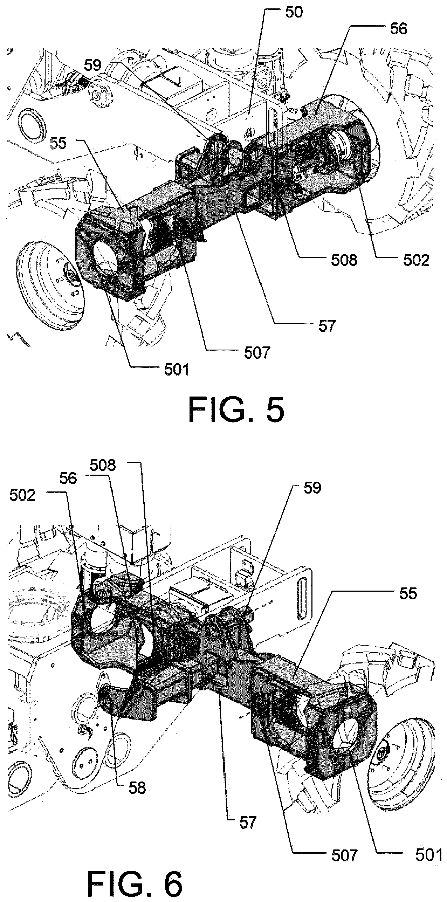

In view of the aforementioned figures, it can be seen how the chassis of the invention is formed of the following parts:
Two axles 50 and 40, which are made up of the following parts, see Figures 3, 4, 5 and 6:
- Axle 50 is made up of a central part 57 and two boxes 55 and 56, which may or may not include steering. Box 55 is attached to the central part 57 by axle 507, which allows for relative rotation between the two. Box 56 is attached to the central part 57 by axle 508, which allows for relative rotation between the two. In turn, the closed box 55 has a flange 501 to which a drive wheel 109 or similar can be bolted to actuate the wheel 4. In turn, the closed box 56 has a flange 502 to which a drive wheel 110 or similar can be bolted to actuate the wheel 5. In turn, the central part 57 has a rotating axle 59 to connect it to the rocker 20 to pivot on it, and another rotating axle 58 to connect it to the end of the actuator 80 "Which may be electric, hydraulic, or pneumatic".
- The axle 40 is made up of a central part 47 and two open boxes 45 and 46, which may or may not include steering 403 and 404. The open box 45 is attached to the central part 47 by the axle 407, which allows for relative rotation between the two. The open box 46 is attached to the central part 47 by the axle 408, which allows for relative rotation between the two. In turn, the open box 45 is connected to a closed box 403 by the axle 406 for directional rotation by way of the actuators 41 and 42, "Which may be electric, hydraulic, or pneumatic". In turn, the open box 46 is connected to the closed box 404 by the rotating axle 405 for directional rotation by way of the actuators 43 and 44, "Which may be electric, hydraulic, or pneumatic" In turn, the closed box 403 has a connecting flange 402 to which a drive wheel 111 or similar can be bolted to actuate the wheel 3. In turn, the closed box 404 has a connecting flange 401 to which a drive wheel 112 or similar can be bolted to actuate the wheel 2. In turn, the central part 47 has a rotating axle 49 to connect it to the rocker 10 to pivot on it, and another rotating axle 48 to connect it to the end of the actuator 60 "Which may be electric, hydraulic, or pneumatic".

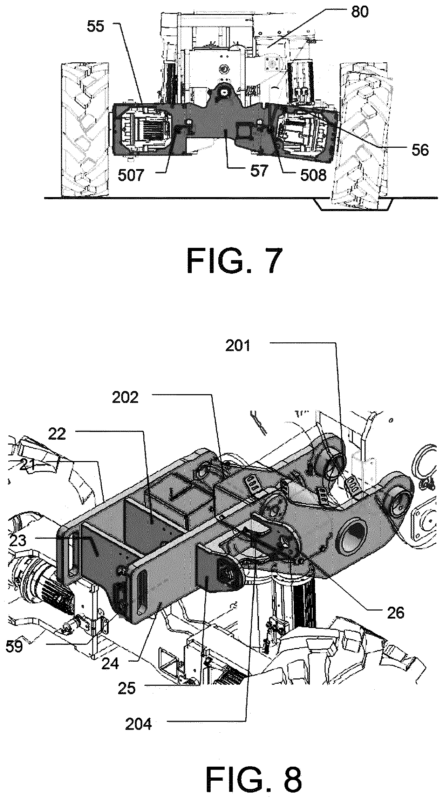

Two rockers 20 and 10, see Figures 8, 9 and 10:
- The rocker 10 has a rotating axle 49 to connect it to the steering 40 and, in turn, another rotating axle 104 to connect it to the actuator 60. In turn, it has another rotating axle 201 to connect it to the central unit 30 and, in turn, a rotating axle 102 to connect it to the actuator 70. The rotating axles 201 and 102 allow for the rocker 10 to level the Y-axis through the actuation of the actuator 70. The rotating axles 49 and 104 allow for the steering 40 to level the X-axis through the actuation of the actuator 60.
- The rocker 20 has a rotating axle 59 to connect it to the steering 50 and, in turn, another rotating axle 204 to connect it to the actuator 80. In turn, it has another rotating axle 201 to connect it to the central unit 30 and, in turn, a rotating axle 202 to connect it to the actuator 90. The rotating axles 201 and 202 allow for the rocker 20 to level the Y-axis through the actuation of the actuator 90. The rotating axles 59 and 204 allow for the steering 50 to level the X-axis through the actuation of the actuator 80.

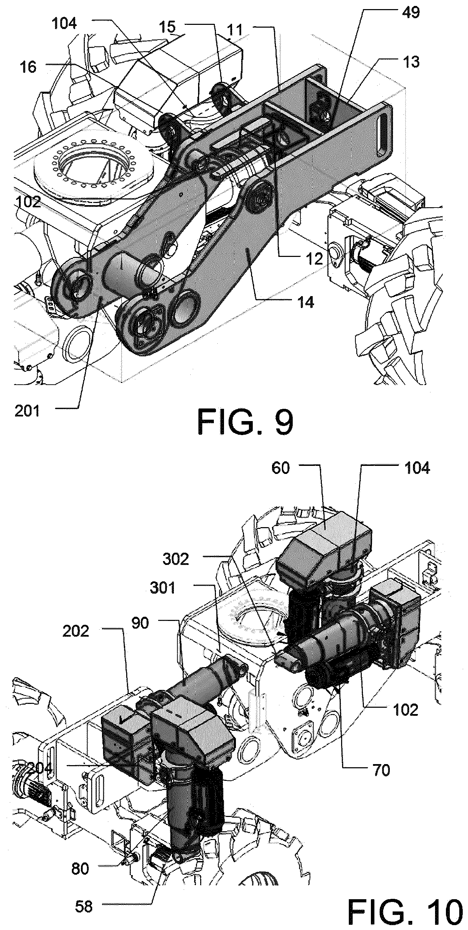

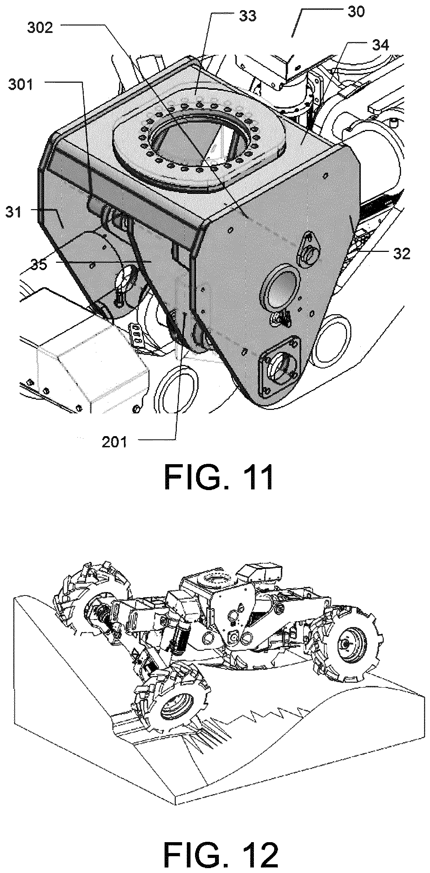

A central unit 30, see Figures 10 and 11.
- The central unit 30 has an upper flange 33 to which to bolt a superstructure to be dynamically levelled. In turn, it has a rotating axle 201 to connect it to the rockers 10 and 20 and, in turn, a rotating axle 302 to connect it to the actuator 70. In turn, it has a rotating axle 301 to connect it to the actuator 90. The rotating axles 201 and 302 allow for the rocker 10 to level the Y-axis through the actuation of the actuator 70. The rotating axles 201 and 301 allow for the rocker 20 to level the Y-axis through the actuation of the actuator 90.

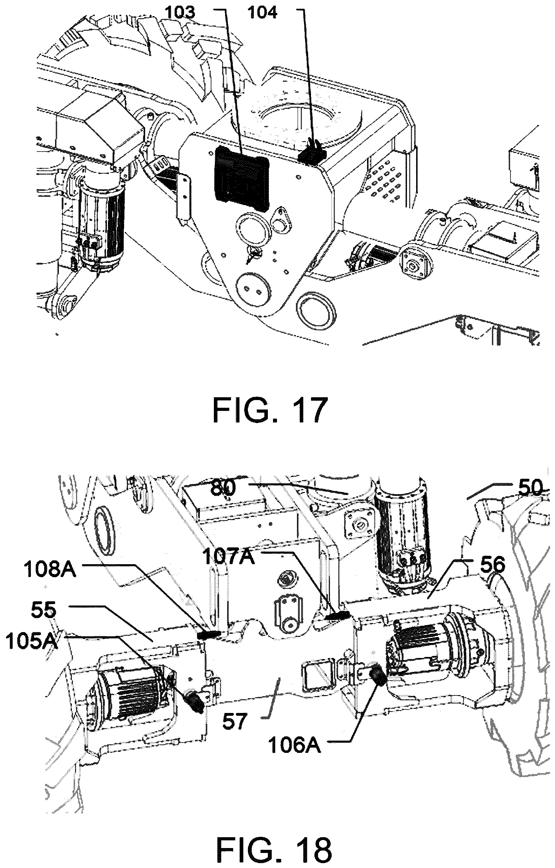

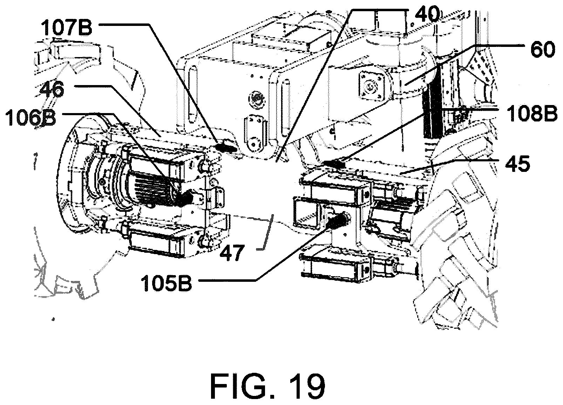

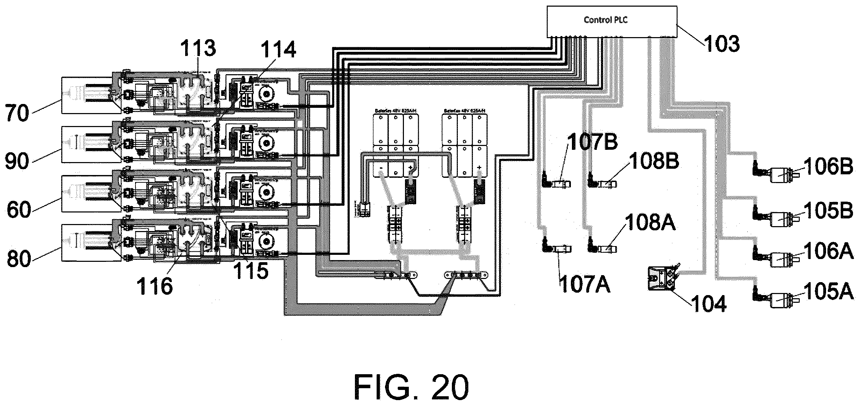

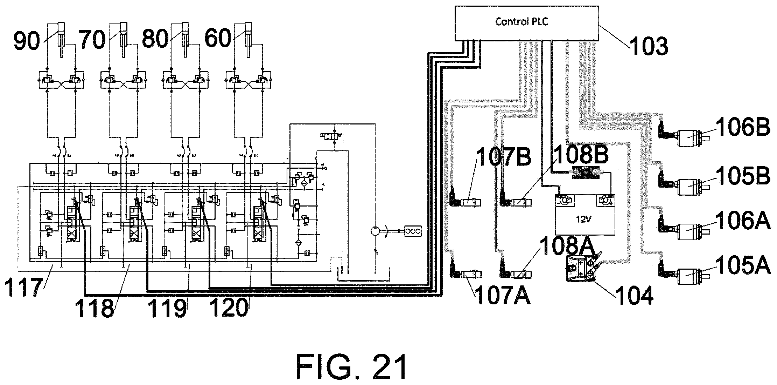

The self-levelling chassis operates using the following basic parts:
- Tilt sensor 104, which can operate based on accelerometers or accelerometers plus gyroscope, although it is not restricted to these technologies. There may be one or two signal outputs depending on the safety level to be obtained, although it is not restricted to this number of outputs. The tilt sensor 104 measures the tilt of the central chassis 30 and sends this information to the control PLC 103.
- Control PLC 103, which is formed internally by two mutually independent programmable controllers, one safety controller for relevant applications regarding safety and another controller for standard applications. The programming software for this PLC is based on Standard IEC 61131-3. The PLC is not restricted to the technology used or the software used for its programming.
- Relative position sensors between closed box 55 and central steering 57.
   ∘ Rotation sensor 105A, the function of which is to measure the relative angle "A" between the parts 55 and 57, shown in Figure 18
   ∘ Inductive sensor 108A, the function of which is to provide a back-up check for the rotation sensor 105A if the part 55 has moved relatively in relation to 57, regardless of the angle by which it has moved.
   ∘ The information collected by these sensors is sent to the control PLC 103 for processing.
   ∘ Determining the angle of relative rotation or determining whether or not there has been movement is not restricted to the technology used by these sensors or by the use of this type or number of sensors.
- Relative position sensors between closed box 56 and central steering 57.
   ∘ Rotation sensor 106A, the function of which is to measure the relative angle between the parts 56 and 57, see "relative angle" in Figure 7.
   ∘ Inductive sensor 107A, the function of which is to provide a back-up check for the rotation sensor 106A if the part 56 has moved relatively in relation to 57, regardless of the angle by which it has moved.
   ∘ The information collected by these sensors is sent to the control PLC 103 "for processing".
   ∘ Determining the angle of relative rotation or determining whether or not there has been movement is not restricted to the technology used by these sensors or by the use of this type or number of sensors.
- Relative position sensors between closed box 46 and central steering 47.
   ∘ Rotation sensor 106B, the function of which is to measure the relative angle between the parts 46 and 47, see "relative angle" in Figure 19
   ∘ Inductive sensor 107A, the function of which is to provide a back-up check for the rotation sensor 106B if the part 46 has moved relatively in relation to 47, regardless of the angle by which it has moved.
   ∘ The information collected by these sensors is sent to the control PLC 103 "See Figures 20 and 21" for processing.
   ∘ Determining the angle of relative rotation or determining whether or not there has been movement is not restricted to the technology used by these sensors or by the use of this type or number of sensors.
- Relative position sensors between closed box 45 and central steering 47.
   ∘ Rotation sensor 105B, the function of which is to measure the relative angle between the parts 45 and 47, see "relative angle" in Figure 7
   ∘ Inductive sensor 108A, the function of which is to provide a back-up check for the rotation sensor 105B if the part 45 has moved relatively in relation to 47, regardless of the angle by which it has moved.
   ∘ The information collected by these sensors is sent to the control PLC 103 "See Figures 20 and 21" for processing.
   ∘ Determining the angle of relative rotation or determining whether or not there has been movement is not restricted to the technology used by these sensors or by the use of this type or number of sensors.
- Secondary support sensors, as an option and only as an improvement, angle or linear sensors may be installed to measure the movement between the following parts:
   ∘ Rocker 10 and central unit 30
   ∘ Rocker 20 and central unit 30
   ∘ Rocker 10 and steering 40
   ∘ Rocker 20 and steering 50

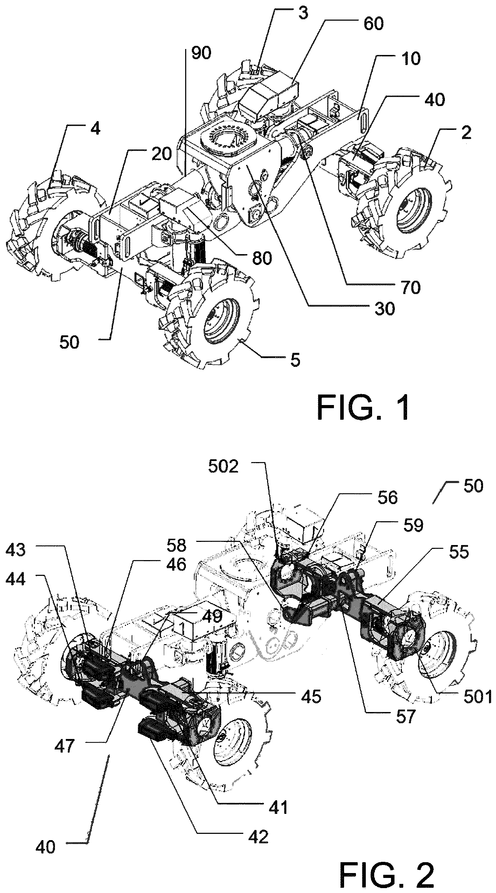

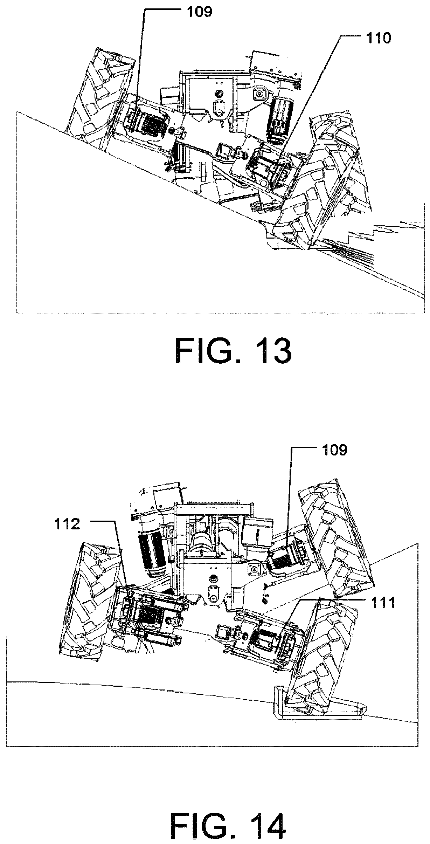

The use of these secondary support sensors is aimed at but not restricted to their use as limit switches and position and speed sensors between parts. Therefore, using closed-loop control methods would give greater precision and control during levelling.
- Parts for the control of the actuators 60,70,80 and 90, see Figure 1, 20 and 21.
   ∘ The actuators 60,70,80 and 90 may be electric, hydraulic, or pneumatic, and their technology is not restricted to the three indicated. The necessary control parts where one of the three technologies is used are explained below.
      ▪ Electric actuators, see Figure 1 and 20: Only one driver would be required to drive one motor for each electric actuator, so that each electric actuator may extend and retract, with the driver for each actuator being controlled in turn by the control PLC 103. The actuator 70 would be driven by the driver 113, the actuator 90 would be driven by the driver 114, the actuator 60 would be driven by the driver 115, the actuator 80 would be driven by the driver 116 and, in turn, the drivers 113, 114, 115 and 116 would be controlled by the control PLC 103.
      ▪ Hydraulic actuators, see Figure 1 and 20: Only one proportional hydraulic distributor would be required for each hydraulic actuator, so that each hydraulic actuator may extend and retract, with the proportional distributor being controlled in turn by the control PLC 103. The actuator 70 would be driven by the proportional distributor 113, the actuator 90 would be driven by the proportional distributor 114, the actuator 60 would be driven by the proportional distributor 115, the actuator 80 would be driven by the proportional distributor 119 and, in turn, the proportional distributors 113, 114, 115 and 120 would be controlled by the control PLC 103.
      ▪ Pneumatic actuators, see Figure 1 and 20: Only one proportional pneumatic distributor would be required for each pneumatic actuator, so that each pneumatic actuator may extend and retract, with the proportional distributor being controlled in turn by the control PLC 103. The actuator 70 would be driven by the proportional distributor 113, the actuator 90 would be driven by the proportional distributor 114, the actuator 60 would be driven by the proportional distributor 115, the actuator 80 would be driven by the proportional distributor 119 and, in turn, the proportional distributors 113, 114, 115 and 120 would be controlled by the control PLC 103.
- Drive wheels 109, 110, 111 and 112 on wheels 2, 3, 4 and 5, see Figures 1, 13 and 14.
   ∘ The drive wheels 109, 110, 111 and 112 are formed by a reducer to which the wheels 2, 3, 4 and 5 are bolted on one side and on which the motor "Which may be electric, hydraulic, or pneumatic" is bolted on the other. In turn, the resulting unit is bolted to the flanges 401, 402, 501 and 502, see Figures 3,4,5 and 6.
- Steering actuators 41, 42, 43 and 44, see Figures 2 and 3.
   ∘ The actuators 41, 42, 43 and 44 may be electric, hydraulic, or pneumatic, although they are not restricted to these technologies.
   ∘ The actuators 41 and 42 actuate the steering formed by the open box 45 and the closed box 403 connected by the rotating axle 406.
   ∘ The actuators 43 and 44 actuate the steering formed by the open box 46 and the closed box 404 connected by the rotating axle 405.
   ∘ These actuators are in turn controlled by the control PLC 103 through:
      ▪ A driver in the case of an electric controller
      ▪ A hydraulic proportional distributor in the case of a hydraulic actuator.
      ▪ A pneumatic proportional distributor in the case of a pneumatic actuator.

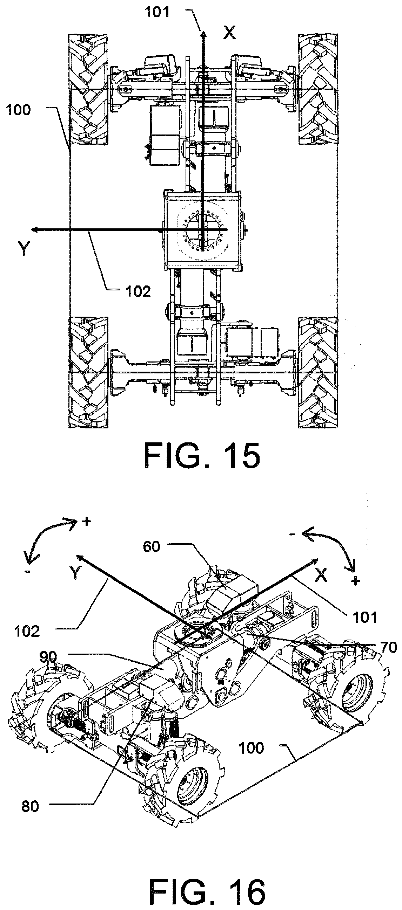

The operation of the levelling system has two main functions:
- To keep the central unit 30 level within certain pre-set limits, which are +-0.5°.
- For the overturning lines generated by the layout of the wheels to remain a rectangle formed by the points where the wheels are in contact with the supporting ground, see Figure 15 and 16.

Conditions:
- The X- and Y-axes are independent and, therefore, can move independently.
- The X-axis gives a value that may be negative or positive, but cannot give a negative and positive value at the same time. Therefore, levelling of the X-axis will only have two options: levelling towards one side or towards the other.
- The Y-axis gives a value that may be negative or positive, but cannot give a negative and positive value at the same time. Therefore, levelling of the Y-axis will only have two options: levelling towards one side or towards the other.

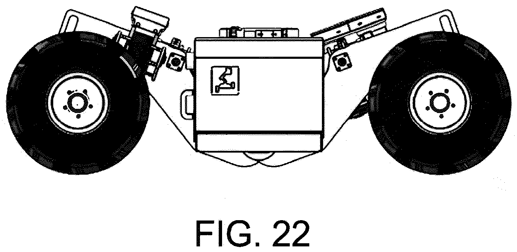

To ensure the two aforementioned points, the levelling system operates as follows:
There is a central unit 30 with two rockers 10 and 20 connected to it, which level the Y-axis using two actuators 70 and 90. While levelling the Y-axis, the rockers 10 and 20 move synchronously, while one rises the other one lowers, and they remain aligned at all times as if they were a rigid unit. In situations where the chassis does not level any of the axles, the rockers can move asynchronously using a manual control to adjust the chassis height, see Figure 22.

In turn, there is an axle 40 connected to the rocker 10 that levels the X-axis using the actuator 60, and an axle 50 connected to the rocker 20 that also levels the X-axis using the actuator 80. While levelling the X-axis, the axles 40 and 50 move synchronously, making the same movement at the same speed while the X-axis is being levelled. This synchronous movement depends on the wheels 2, 3, 4 and 5 being in contact with the ground. If one of the wheels 2, 3, 4 and 5 is not in contact with the ground, see Figure 12, 13 and 14, the axle corresponding to the wheel not in contact with the ground will perform the X-axis levelling movement at a higher or lower speed, or will make a change in direction of movement so that the corresponding wheel once again touches the ground while continuing to level the X-axis.

The information on one wheel not being in contact with the ground or that it is about to lose contact is obtained from the angle of relative rotation and the discrete value of the relative movement of the parts. The value of the angle of rotation is obtained from the rotation sensor 105A, 106A, 105B and 106B, the discrete value of the relative movement of the wheels is obtained from the inductive sensors 107A, 108A, 107B and 108B.

The speed at which the system must act to keep the four wheels in contact with the ground is given by the angle of rotation sensors 105A, 106A, 105B and 106B. Depending on the time taken to change the angle at any given time, the speed of relative rotation can be obtained and, therefore, it is possible to respond with more or less speed to achieve a smoother movement of the action.

The tilt value of the central chassis 30 is obtained from the tilt sensor 104, which sends the tilt value to the control PLC 103.

More specifically, the control PLC processes the information from the sensors as follows to actuate each of the actuators in order to level the central part 30 and keep the four wheels 2, 3, 4 and 5 in contact with the ground:

### Safety tasks.

If the sensor 106a or 107a detects relative movement between the parts 56 and 57 and, in turn, the sensor 105a or 108a detects relative movement between the parts 55 and 57 OR
If the sensor 105b or 108b detects relative movement between the parts 45 and 47 and, in turn, the sensor 106b or 107b detects relative movement between the parts 46 and 47 OR
If the sensor 106a or 107a detects relative movement between the parts 56 and 57 and, in turn, the sensor 106b or 107b detects relative movement between the parts 46 and 47 OR
If the sensor 105a or 108a detects relative movement between the parts 55 and 57 and, in turn, the sensor 105b or 108b detects relative movement between the parts 45 and 47
Then the actuators 60 and 70 and 80 and 90 are blocked to avoid the danger of overturning.

### Y-axis levelling.

### If the Y-axis

- Has exceeded 0.5°, then the actuator 90 retracts and the actuator 70 extends. If the Y-axis continues to exceed 0.5°, then the actuator 90 continues to retract and the actuator 70 continues to extend. If the Y-axis comes within 0.5°, then the actuators 70 and 90 stop.
- Does NOT exceed 0.5°, the actuators 70 and 90 remain stopped
- Has exceeded -0. 5°, then the actuator 90 extends and the actuator 70 retracts. If the Y-axis continues to exceed -0.5°, then the actuator 90 continues to extend and the actuator 70 continues to retract. If the Y-axis comes within -0.5°, then the actuators 70 and 90 stop.
- Does NOT exceed -0.5°, the actuators 70 and 90 remain stopped

### X-axis levelling

### If the X-axis

- Has exceeded -0.5°
   ∘ If the sensor 106A or 107A detects relative movement between the part 56 and 57, then the actuator 80 extends and the actuator 60 extends. If, while this occurs, NO relative movement is detected between the parts 56 and 57, then the actuator 80 retracts and the actuator 60 extends.
   ∘ If the sensor 106A or 107A does NOT detect relative movement between the part 56 and 57, the actuator 80 retracts and the actuator 60 extends. If, during this time, the X-axis comes within -0.5°, then the actuators 60 and 80 stop
   ∘ If the sensor 105A or 108A detects relative movement between the part 55 and 57, then the actuator 80 retracts at a higher speed and the actuator 60 extends. If, while this occurs, NO relative movement is detected between the parts 55 and 57, then the actuator 80 retracts at the same speed as the actuator 60 and the actuator extends.
   ∘ If the sensor 105A or 108A does NOT detect relative movement between the part 55 and 57, the actuator 80 retracts and the actuator 60 extends. If, during this time, the X-axis comes within -0.5°, then the actuators 60 and 80 stop
   ∘ If the sensor 105A or 108b detects relative movement between the part 45 and 47, then the actuator 80 retracts and the actuator 60 extends at a higher speed. If, while this occurs, NO relative movement is detected between the parts 45 and 47, then the actuator 80 retracts and the actuator 60 extends at the same speed as the actuator 80.
   ∘ If the sensor 105B or 108B does NOT detect relative movement between the part 45 and 47, the actuator 80 retracts and the actuator 60 extends. If, during this time, the X-axis comes within -0.5°, then the actuators 60 and 80 stop
   ∘ If the sensor 106B or 107B detects relative movement between the part 46 and 47, then the actuator 80 retracts and the actuator 60 retracts. If, while this occurs, NO relative movement is detected between the parts 46 and 47, then the actuator 80 retracts and the actuator 60 extends.
   ∘ If the sensor 106B or 107B does NOT detect relative movement between the part 46 and 47, the actuator 80 retracts and the actuator 60 extends. If, during this time, the X-axis comes within -0.5°, then the actuators 60 and 80 stop
- Has exceeded 0.5°
   ∘ If the sensor 106A or 107A detects relative movement between the part 56 and 57, then the actuator 80 extends at a higher speed and the actuator 60 retracts. If, while this occurs, NO relative movement is detected between the parts 56 and 57, then the actuator 80 extends at the same speed as the actuator 60 and the actuator 60 extends.
   ∘ If the sensor 106A or 107A does NOT detect relative movement between the part 56 and 57, the actuator 80 retracts and the actuator 60 retracts. If, during this time, the X-axis comes within 0.5°, then the actuators 60 and 80 stop.
   ∘ If the sensor 105A or 108A detects relative movement between the part 55 and 57, then the actuator 80 retracts and the actuator 60 retracts. If, while this occurs, NO relative movement is detected between the parts 55 and 57, then the actuator 80 extends and the actuator 60 retracts.
   ∘ If the sensor 105A or 108A does NOT detect relative movement between the part 55 and 57, the actuator 80 retracts and the actuator 60 retracts. If, during this time, the X-axis comes within 0.5°, then the actuators 60 and 80 stop.
   ∘ If the sensor 105B or 108B detects relative movement between the part 45 and 47, then the actuator 80 extends and the actuator 60 extends. If, while this occurs, NO relative movement is detected between the parts 45 and 47, then the actuator 80 extends and the actuator 60 retracts.
   ∘ If the sensor 105B or 108B does NOT detect relative movement between the part 45 and 47, the actuator 80 extends and the actuator 60 retracts. If, during this time, the X-axis comes within 0.5°, then the actuators 60 and 80 stop.
   ∘ If the sensor 106B or 107B detects relative movement between the part 46 and 47, then the actuator 80 extends and the actuator 60 retracts at a higher speed. If, while this occurs, NO relative movement is detected between the parts 46 and 47, then the actuator 80 extends and the actuator 60 retracts at the same speed as the actuator 80.
   ∘ If the sensor 106B or 107B does NOT detect relative movement between the part 46 and 47, the actuator 80 extends and the actuator 60 retracts. If, during this time, the X-axis comes within 0.5°, then the actuators 60 and 80 stop.

## Claims

1. Multi-function self-levelling chassis, **characterised by** the fact that the following parts are included in it:
a) A central unit 30, with an upper flange 33 bolted to the superstructure to be dynamically levelled.
b) Two rockers 10 and 20, which are connected to the central unit 30, one front and one rear, both jointed in relation to the central unit 30 using their respective horizontal-transversal rotating axles 201, which include a horizontal-longitudinal rotating axle 49-59 to connect to the steering 40-50, a horizontal-longitudinal rotating axle 104-204 to connect to an actuator 60-80, and a horizontal-transverse rotating axle 102-202 to connect to an actuator 70-90 used to level the Y-axis, whereas the steering 40-50 is controlled by the actuators 60-80 that level the X-axis.
c) Both rear and front axles 50 and 40 connected to the wheels 2-3-4-5 by the corresponding drives. These axles are connected to the rockers 10-20 by their rotating axles 49-59, and include a central part 57-47 and two boxes 55-56 and 45-46, which may include steering 403 and 404. The boxes 55 and 56 are connected to the central part 57 by the axles 507 and 508, whereas the boxes 45-46 are connected to the central part 47 by the axles 407 and 408.
With the singularity that the central part 57 has another rotating axle 58 to connect it to the end of the actuator 80. The design includes the boxes 45-46 on the front axle 40 that are open and are connected to the central part 47 by a horizontal-longitudinal axle 408-407, and each open box 45-46 is connected to a closed box 403-404 by a vertical axle 406-405, the directional rotation of which is controlled by actuators 41-43 and 42-44. The central part 47 of the front axle 40 includes another rotating axle 48 to connect it to the end of the corresponding actuator 60. The chassis has at least one tilt sensor 104 on the central chassis 30, which is connected to a control PLC 103, with sensors or combined sensors and load cells, such as relative position sensors, between closed box 56 and central steering 57, relative position sensors between closed box 46 and central steering 47, relative position sensors between closed box 45 and central steering 47, and parts to control the actuators 60,70,80 and 90.

2. Multi-function self-levelling chassis, according to Claim 1, **characterised by** the fact that the tilt sensor 104 includes accelerometers or accelerometers plus gyroscope, and may include one, two or more signal outputs depending on the safety level to be obtained.

3. Multi-function self-levelling chassis, according to Claim 1, **characterised by** the fact that the control PLC 103 is formed internally by two mutually independent programmable controllers, one safety controller for relevant applications regarding safety and another controller for standard applications.

4. Multi-function self-levelling chassis, according to Claim 1, **characterised by** the fact that the relative position sensors between boxes and central steering include relative position sensors between closed box 55 and central steering 57, a rotation sensor 105A to measure the relative angle between the parts 55 and 57, and an inductive sensor 108A for relative movement control between the parts 55 and 57.

5. Multi-function self-levelling chassis, according to Claim 1, **characterised by** the fact that the relative position sensors between boxes and central steering include relative position sensors between closed box 56 and central steering 57, a rotation sensor 106A to measure the relative angle between the parts 56 and 57, and an inductive sensor 107A for relative movement control between the parts 56 and 57.

6. Multi-function self-levelling chassis, according to Claim 1, **characterised by** the fact that the relative position sensors between boxes and central steering include relative position sensors between closed box 46 and central steering 47, a rotation sensor 106B to measure the relative angle between the parts 46 and 47, and an inductive sensor 107B for relative movement control between the parts 46 and 47.

7. Multi-function self-levelling chassis, according to Claim 1, **characterised by** the fact that the relative position sensors between boxes and central steering include relative position sensors between closed box 45 and central steering 47, a rotation sensor 105B to measure the relative angle between the parts 45 and 47, and an inductive sensor 108B for relative movement control between the parts 45 and 47.

8. Multi-function self-levelling chassis, according to Claim 1, **characterised by** the fact that the relative position sensors between boxes and central steering include secondary support sensors, such as angle or linear sensors to measure the movement between the following parts:
∘ Rocker 10 and central unit 30
∘ Rocker 20 and central unit 30
∘ Rocker 10 and steering 40
∘ Rocker 20 and steering 50

9. Multi-function self-levelling chassis, according to Claim 1, **characterised by** the fact that when the actuators 60,70,80 and 90 are electric, they are controlled through a driver that drives a motor for each electric actuator. The driver for each actuator is in turn controlled by the control PLC 103.

10. Multi-function self-levelling chassis, according to Claim 1, **characterised by** the fact that when the actuators 60,70,80 and 90 are hydraulic, they are controlled through a proportional hydraulic distributor for each hydraulic actuator. Each proportional distributor is in turn controlled by the control PLC 103.

11. Multi-function self-levelling chassis, according to Claim 1, **characterised by** the fact that when the actuators 60,70,80 and 90 are pneumatic, they are controlled through a proportional pneumatic distributor for each actuator. Each proportional distributor is in turn controlled by the control PLC 103.

12. Multi-function self-levelling chassis, according to Claim 1, **characterised by** the fact that the drive wheels 109, 110, 111 and 112 associated to the wheels 2, 3, 4 and 5 are formed by a reducer to which the wheels 2, 3, 4 and 5 are bolted on one side and the motor, which may be electric, hydraulic, or pneumatic, on the other.

13. Multi-function self-levelling chassis, according to Claim 1, **characterised by** the fact that the actuators 41, 42, 43 and 44 may be electric, hydraulic, or pneumatic.

14. Multi-function self-levelling chassis, according to Claim 13, **characterised by** the fact that when the actuators 41, 42, 43 and 44 are electric, they are controlled through the PLC by a driver.

15. Multi-function self-levelling chassis, according to Claim 13, **characterised by** the fact that when the actuators 41, 42, 43 and 44 are hydraulic, they are controlled through the PLC by a hydraulic proportional distributor.

16. Multi-function self-levelling chassis, according to Claim 13, **characterised by** the fact that when the actuators 41, 42, 43 and 44 are pneumatic, they are controlled through the PLC by a pneumatic proportional distributor.
